# EUROPÄISCHE PATENTANMELDUNG

(11) **EP 1 160 800 A1**
(43) Veröffentlichungstag der Anmeldung: **05.12.2001**
(21) Anmeldenummer: 00401411.4
(22) Anmeldetag: 22.05.2000
(51) Int. Cl.: H01B 7/295, G02B 6/44

(54) **Anordnung zum funktionserhalt eines Kabels im Brandfall**

(71) Anmelder: ALCATEL, 75008 Paris (FR)
(72) Erfinder: Mahlandt, Erhard, Dipl.-Ing., 30880 Laatzen (DE); Fisher, Horst, Dipl.-Ing., 31515 Wunstorf (DE)
(74) Vertreter: Döring, Roger, Dipl.-Ing.

(57) **Zusammenfassung**

Es wird eine Anordnung zum Funktionserhalt eines Kabels (1) im Brandfall angegeben, das der Übertragung von Signalen dienende Leiter (2,4) aufweist, die von einem gemeinsamen Mantel (5) aus Isoliermaterial umgeben sind. Es ist außerdem eine den Funktionserhalt des Kabels (1) sichernde, die Leiter (2,4) umgebende Schicht vorhanden. Als funktionserhaltende Schicht ist über dem Mantel (5) auf der ganzen Länge des Kabels (1) eine rundum geschlossene Hülle (H) aus einem nicht brennbaren, mineralischen Material angebracht.

## Beschreibung

Die Erfindung bezieht sich auf eine Anordnung zum Funktionserhalt eines Kabels im Brandfall, das der Übertragung von Signalen dienende Leiter aufweist, die von einem gemeinsamen Mantel aus Isoliermaterial umgeben sind, und bei welchem eine den Funktionserhalt des Kabels sichernde, die Leiter umgebende Schicht vorhanden ist (EP 0 308 111 B1).

Derartige Kabel können Nachrichtenkabel mit elektrischen und/oder optischen Leitern sowie Hochfrequenzkabel (HF-Kabel) sein, wie koaxiale HF-Kabel, abstrahlende HF-Kabel und Hohlleiter. Alle diese Kabel dienen der Übertragung von nachrichtentechnischen bzw. hochfrequenten Signalen. Der Erhalt ihrer Funktionsfähigkeit ist in den meisten Einsatzfällen - insbesondere auch im Falle eines Brandes mit offener Flamme - von wesentlicher Bedeutung. Es muß dann sichergestellt sein, daß das jeweilige Kabel seine Funktion zumindest für eine vorgegebene Zeitdauer beibehält. Entsprechende Forderungen sind beispielsweise der internationalen Vorschrift IEC 60331 zu entnehmen.

Aus der US-PS 3,425,865 geht eine elektrische Leitung mit einem speziellen Mantel aus einem Isoliermaterial hervor, das einen Funktionserhalt der Leitung auch bei offener Flamme mit Temperaturen bis zu 540 °C sicherstellen soll. Der Mantel weist eine Barriereschicht auf, die aus auf einen Träger aus Glas aufgebrachtem Glimmer (Mica) oder Asbest besteht. Über der Barriereschicht ist eine Polyimidumhüllung angebracht, die ihrerseits von einem Schutzmantel umgeben ist.

Die eingangs erwähnte EP 0 308 11 B1 beschreibt ein abstrahlendes koaxiales HF-Kabel mit Löchern im rohrförmigen Außenleiter. Über dem Außenleiter ist mindestens ein Band aus einem Material angebracht, das Temperaturen bis zu 1000 °C aushält. Über dem Band ist zusätzlich ein Schutzmantel aus flammbeständigem Material angebracht. Das Band besteht aus mit einem hitzebeständigen Kleber imprägnierten Glimmer, der auf einem Träger aus Glasfäden angebracht ist. Der Aufwand zum Schutz dieses HF-Kabels gegen hohe Temperaturen ist ebenso wie bei anderen bekannten Kabeln erheblich.

Der Erfindung liegt die Aufgabe zugrunde, die eingangs geschilderte Anordnung so zu gestalten, daß ein Funktionserhalt des Kabels im Brandfall auch bei Temperaturen von mehr als 1000°C auf einfache Weise erreicht werden kann.

Diese Aufgabe wird gemäß dieser Erfindung dadurch gelöst, daß über dem Mantel auf der ganzen Länge des Kabels eine rundum geschlossene Hülle aus einem nicht brennbaren, mineralischen Material angebracht ist.

Mit dieser Anordnung ist jedes herkömmliche Kabel auf einfache Weise gegen hohe Temperaturen geschützt, wie sie im Brandfall bei offener Flamme auftreten. Der ganz wesentliche Vorteil der Anordnung besteht darin, daß das jeweilige Kabel in üblicher Technik mit auf seinen Verwendungszweck abgestimmten Materialien aufgebaut werden kann. Zusätzliche Schichten oder Schichten aus einem speziellen, temperaturbeständigen Material sind nicht erforderlich. Das an sich fertige Kabel wird bei dieser Anordnung abschließend in die Hülle aus nicht brennbarem, mineralischem Material eingebettet. Sein Funktionserhalt ist dadurch im Brandfall für lange Zeit gesichert.

Zum Schutz gegen Feuchtigkeit ist die Hülle zweckmäßig von einer dünnen, feuchtigkeitsdichten Schicht umgeben. Diese kann aus Metall bestehen. Beispielsweise beim Einsatz der Anordnung für abstrahlende HF-Kabel besteht die Schicht aus Kunststoff.

Weitere vorteilhafte Ausgestaltungen der Erfindung gehen aus den Unteransprüchen hervor.

Ein Ausführungsbeispiel des Erfindungsgegenstandes ist in den Zeichnungen dargestellt.

### Es zeigen:

Fig. 1 eine Anordnung nach der Erfindung in schematischer Darstellung.
Fig. 2 einen Schnitt durch Fig. 1 längs der Linie II - II.

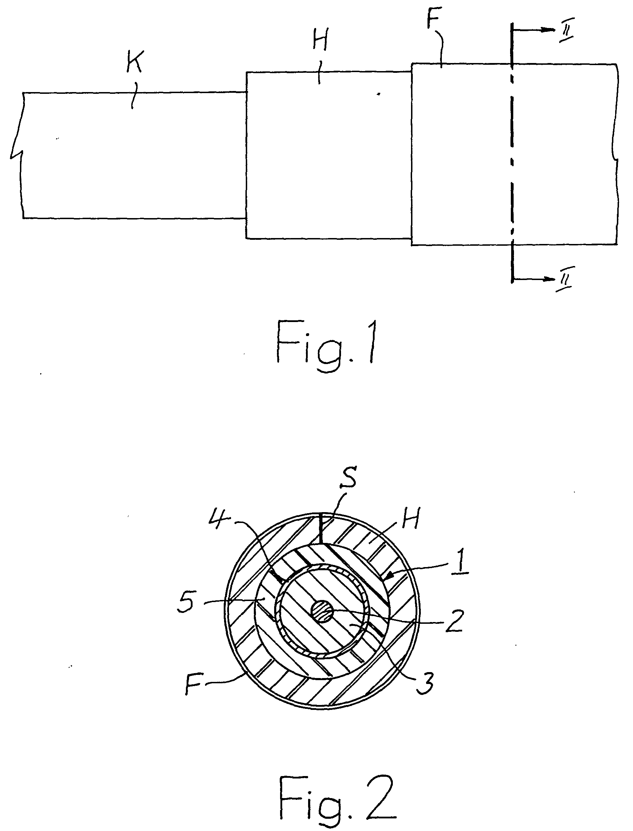

In Fig. 1 ist ein beliebiges Kabel K zur Übertragung von Signalen wiedergegeben. Es ist im dargestellten Ausführungsbeispiel als koaxiales HF-Kabel 1 ausgeführt, das einen Innenleiter 2, ein denselben umgebendes Dielektrikum 3 und einen zum Innenleiter 2 konzentrischen, rohrförmigen Außenleiter 4 aufweist. Über dem Außenleiter 4 ist ein Mantel 5 aus Isoliermaterial angebracht. Das HF-Kabel 1 kann nur zur Einhaltung von optimalen Übertragungseigenschaften ausgelegt sein. Besondere Maßnahmen zum Schutz gegen Feuer brauchen nicht vorgesehen zu sein.

Das Kabel K ist auf seiner ganzen Länge in eine rundum geschlossene Hülle H aus einem nicht brennbaren, mineralischen Material eingebettet. Ein solches Material ist beispielsweise Mineralwolle, wie die im Handel erhältliche Steinwolle. Die Hülle H schützt das Kabel K im Brandfalle vor offenen Flammen, so daß es nicht brennen kann. Es kann dadurch seine Funktion zumindest für eine ausreichende Zeit beibehalten, bis möglicherweise durch Erweichung von Isoliermaterial ein Kurzschluß zwischen elektrischen Leitern entsteht.

Um die Hülle H vor Feuchtigkeit zu schützen, ist über derselben eine feuchtigkeitsdichte äußere Schicht F angebracht. Die Schicht F kann aus Metall oder aus Kunststoff bestehen. Sie ist dünn im Verhältnis zur radialen Höhe (Dicke) der Hülle H. Wenn das Kabel K ein abstrahlendes HF-Kabel ist, dann bestehen Hülle H und Schicht F aus metallfreiem, die Abstrahlungseigenschaften nicht störend beeinflussendem Material. Für die Schicht F wird dann vorzugsweise ein flammwidriger Kunststoff verwendet, der eine Weiterleitung von Flammen verhindert und denselben zusätzlich Energie entzieht.

Die Hülle H besteht in bevorzugter Ausführungsform aus vorgefertigten, an einem Längsschlitz S offenen Rohren. Solche Rohre können in einfacher Weise auf das Kabel K aufgesteckt werden. Dabei wird der Längsschlitz S zum Durchlaß des Kabels K aufgeweitet. Er geht durch einige Rückstellkraft wieder zu und kann zur Fertigstellung der Hülle H mit einem feuerfesten Kleber verschlossen werden.

## Patentansprüche

1. Anordnung zum Funktionserhalt eines Kabels im Brandfall, das der Übertragung von Signalen dienende Leiter aufweist, die von einem gemeinsamen Mantel aus Isoliermaterial umgeben sind, und bei welchem eine den Funktionserhalt des Kabels sichernde, die Leiter umgebende Schicht vorhanden ist, **dadurch gekennzeichnet, daß** über dem Mantel (5) auf der ganzen Länge des Kabels (K) eine rundum geschlossene Hülle (H) aus einem nicht brennbaren, mineralischen Material angebracht ist.

2. Anordnung nach Anspruch 1, **dadurch gekennzeichnet, daß** die Hülle (H) aus Steinwolle besteht.

3. Anordnung nach Anspruch 1 oder 2, **dadurch gekennzeichnet, daß** die Hülle (H) von einer feuchtigkeitsdichten äußeren Schicht (F) umgeben ist.

4. Anordnung nach einem der Ansprüche 1 oder 3, **dadurch gekennzeichnet, daß** die äußere Schicht (F) dünn ist im Verhältnis zur radialen Höhe der Hülle (H).

5. Anordnung nach einem der Ansprüche 1 bis 4, **dadurch gekennzeichnet, daß** die Schicht (F) aus Metall besteht.

6. Anordnung nach einem der Ansprüche 1 bis 4, **dadurch gekennzeichnet, daß** die Schicht (F) aus flammwidrigem Kunststoff besteht.

7. Verwendung der Hülle (H) aus nicht brennbarem, mineralischem Material für ein koaxiales Hochfrequenzkabel (1).

8. Verwendung der Hülle (H) aus nicht brennbarem, mineralischem Material für ein abstrahlendes Hochfrequenzkabel.
